# EUROPÄISCHE PATENTSCHRIFT

(11) **EP 3 601 755 B1**
(45) Veröffentlichungstag und Bekanntmachung des Hinweises auf die Patenterteilung: **25.08.2021**
(21) Anmeldenummer: 18712864.0
(22) Anmeldetag: 20.03.2018
(51) Int. Cl.: F01N 3/021, F01N 3/10

(54) **KATALYTISCH AKTIVES PARTIKELFILTER**
PARTICLE FILTER
FILTRE A PARTICULES

(30) Priorität: 23.03.2017 EP 17162471
(43) Veröffentlichungstag der Anmeldung: 05.02.2020
(73) Patentinhaber: Umicore AG & Co. KG, 63457 Hanau-Wolfgang (DE)
(72) Erfinder: DEIBEL, Naina, 64319 Pfungstadt (DE); SPIESS, Stephanie, 64289 Darmstadt (DE); ROESCH, Martin, 63110Rodgau (DE); RICHTER, Joerg-Michael, 60389 Frankfurt (DE); SCHOENHABER, Jan, 64287 Darmstadt (DE); KUNERT, Susanne, 64342 Seeheim-Jugenheim (DE)
(86) Internationale Anmeldenummer: PCT/EP2018/056919
(87) Internationale Veröffentlichungsnummer: WO 2018/172299

(56) Entgegenhaltungen:
- EP-A1- 2 042 225
- EP-A1- 2 461 895
- EP-A1- 2 489 844
- WO-A1-01/12320
- WO-A1-2005/014146
- DE-A1-102011 050 788
- FR-A1- 3 020 091
- US-A1- 2011 179 777
- US-A1- 2012 186 229

## Beschreibung

Die vorliegende Erfindung betrifft ein katalytisch aktives Partikelfilter, das sich insbesondere für die Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren eignet.

Abgase von mit stöchiometrischem Luft/Kraftstoff-Gemisch betriebenen Verbrennungsmotoren, also Benzinmotoren, werden in herkömmlichen Verfahren mit Hilfe von Dreiwege-Katalysatoren gereinigt. Diese sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen.

Neben diesen gasförmigen Schadstoffen enthält das Abgas von Benzinmotoren aber auch feinste Partikel (PM), die aus der unvollständigen Verbrennung des Kraftstoffs resultieren und im Wesentlichen aus Ruß bestehen. Im Unterschied zur Partikelemission von Dieselmotoren sind die Partikel im Abgas stöchiometrisch betriebener Benzinmotoren sehr klein und weisen eine durchschnittliche Partikelgröße kleiner 1 µm auf. Typische Partikelgrößen liegen im Bereich 10 bis 200 nm. Des Weiteren ist die emittierte Partikelmenge sehr gering und bewegt sich im Bereich von 2 bis 4 mg.

Mit der europäischen Abgasnorm EU-6c ist eine Umstellung des Grenzwertes für solche Partikel vom Partikelmassengrenzwert auf einen kritischeren Partikelzahlgrenzwert von 6 x 10¹¹/km (im Worldwide harmonized Light vehicles Test Cycle - WLTP) verbunden. Damit entsteht Bedarf nach Abgasreinigungskonzepten für stöchiometrisch betriebene Verbrennungsmotoren, die effektiv arbeitende Einrichtungen zur Entfernung von Partikeln umfassen.

Im Bereich der Reinigung von Abgas von mager betriebenen Motoren, also insbesondere von Dieselmotoren, haben sich Wandflussfilter aus keramischen Materialien, wie z.B. Siliciumcarbid, Aluminiumtitanat und Cordierit bewährt. Diese sind aus einer Vielzahl von parallelen Kanälen aufgebaut, die durch poröse Wände gebildet werden. Die Kanäle sind wechselseitig an einem der beiden Enden des Filters gasdicht verschlossen, so dass Kanäle A gebildet werden, die an der ersten Seite des Filters offen und auf der zweiten Seite des Filters verschlossen sind, sowie Kanäle B, die an der ersten Seite des Filters verschlossen und auf der zweiten Seite des Filters offen sind. Das beispielsweise in die Kanäle A einströmende Abgas kann den Filter nur über die Kanäle B wieder verlassen, und muss zu diesem Zweck durch die porösen Wände zwischen den Kanälen A und B durchfließen. Beim Durchtritt des Abgases durch die Wand werden die Partikel zurückgehalten und das Abgas gereinigt.

Die so zurückgehaltenen Partikel müssen nachfolgend abgebrannt bzw. oxidiert werden, um ein Verstopfen des Filters bzw. einen inakzeptablen Anstieg des Gegendrucks des Abgassystems zu verhindern. Zu diesem Zweck wird beispielsweise das Wandflussfilter mit katalytisch aktiven Beschichtungen versehen, die die Zündtemperatur von Ruß herabsetzen. Es ist bereits bekannt, solche Beschichtungen auf die porösen Wände zwischen den Kanälen aufzubringen (sogenannte auf-Wand-Beschichtung) oder in die porösen Wände einzubringen (sogenannte in-Wand-Beschichtung). Die EP 1 657 410 A2 beschreibt auch bereits eine Kombination beider Beschichtungsarten, d.h. ein Teil des katalytisch aktiven Materials liegt in den porösen Wänden und ein anderer Teil auf den porösen Wänden vor.

Das Konzept, Partikel mittels Wandflussfiltern aus dem Abgas zu entfernen, ist bereits auf die Reinigung von Abgas von mit stöchiometrischem Luft/Kraftstoff-Gemisch betriebenen Benzinmotoren übertragen worden, siehe zum Beispiel die EP 2042226 A2. Gemäß deren Lehre trägt ein Wandflussfilter zwei übereinander angeordnete Schichten, wobei eine in der porösen Wand und die andere auf der porösen Wand angeordnet sein kann. Ein ähnliches Konzept verfolgt die DE 102011050788 A1. Dort enthalten die porösen Filterwände ein Katalysatormaterial eines Drei-Wege-Katalysators, während zusätzlich die Zwischenwände ein Katalysatormaterial eines Drei-Wege-Katalysators in den jeweiligen Endabschnitten sowohl auf der Einströmseite wie auf der Ausströmseite tragen.

Die FR 3 020 091 A1 offenbart einen Partikelfilter, der eine Beschichtung in den porösen Wänden, sowie Beschichtungen auf den Oberflächen der Eingangs- und Ausgangskanäle trägt. Letztere erstrecken sich auf einem Teilbereich der Filterlänge und zwar sowohl auf den Eingangs- wie auf den Ausgangsoberflächen auf der Seite des Filters, an der das Abgas eintritt. Es besteht weiter Bedarf nach katalytisch aktiven Partikelfiltern, die die Funktionalitäten eines Partikelfilters und eines Dreiwegekatalysators vereinen und dabei die künftig geltenden Grenzwerte einzuhalten erlauben.

Die vorliegende Erfindung betrifft einen Partikelfilter gemäss Anspruch 1.

Die Beschichtungen X, Y und Z sind katalytisch aktiv, insbesondere bei Betriebstemperaturen von 250 bis 1100 °C. Sie sind verschieden voneinander, alle drei enthalten aber üblicherweise ein oder mehrere Edelmetalle, die auf einem oder mehreren Trägermaterialien fixiert sind, sowie ein oder mehrere Sauerstoffspeicherkomponenten.

Die Beschichtungen X, Y und Z können sich hinsichtlich der enthaltenen Komponenten unterscheiden. So können sie sich beispielsweise hinsichtlich der enthaltenen Edelmetalle oder hinsichtlich der enthaltenen Sauerstoffspeicherkomponenten unterscheiden.

Sie können aber auch identische Bestandteile enthalten, diese müssen dann aber in unterschiedlichen Mengen vorliegen.

Die Beschichtungen X, Y und Z umfassen bevorzugt keine SCR-Katalysatoren, insbesondere keine Metall-ausgetauschten Molekularsiebe.

Als Edelmetalle kommen insbesondere Platin, Palladium und Rhodium in Frage, wobei Palladium, Rhodium oder Palladium und Rhodium bevorzugt sind.

Die Edelmetalle werden üblicherweise in Mengen von 0,4 bis 4 g/l, bezogen auf das Volumen des Wandflussfilters eingesetzt.

Als Trägermaterialien für die Edelmetalle kommen alle dem Fachmann für diesen Zweck geläufigen Materialien in Betracht. Solche Materialien sind insbesondere Metalloxide mit einer BET-Oberfläche von 30 bis 250 m²/g, bevorzugt von 100 bis 200 m²/g (bestimmt nach DIN 66132).

Besonders geeignete Trägermaterialien für die Edelmetalle sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise Lanthanoxid-, Zirkoniumoxid- und/oder Titanoxid-dotierte Aluminiumoxide. Mit Vorteil wird Lanthan-stabilisiertes Aluminiumoxid eingesetzt, wobei Lanthan in Mengen von 1 bis 10 Gew.-%, bevorzugt 3 bis 6 Gew.-%, jeweils berechnet als La₂O₃ und bezogen auf das Gewicht des stabilisierten Aluminiumoxides, verwendet wird.

Als Sauerstoffspeicherkomponente kommen insbesondere Cer/Zirkonium/ Seltenerdmetall-Mischoxide in Frage. Der Begriff "Cer/Zirkonium/ Seltenerdmetall-Mischoxid" im Sinne vorliegender Erfindung schließt physikalische Mischungen aus Ceroxid, Zirkoniumoxid und Seltenerdoxid aus. Vielmehr sind "Cer/Zirkonium/Seltenerdmetall-Mischoxide" durch eine weitgehend homogene, dreidimensionale Kristallstruktur gekennzeichnet, die idealerweise frei ist von Phasen aus reinem Ceroxid, Zirkoniumoxid bzw. Seltenerdoxid. Je nach Herstellungsverfahren können aber auch nicht vollständig homogene Produkte entstehen, die in der Regel ohne Nachteil verwendet werden können.

Im Übrigen umfasst der Begriff Seltenerdmetall bzw. Seltenerdmetalloxid im Sinne vorliegender Erfindung kein Cer bzw. kein Ceroxid.

Als Seltenerdmetalloxide in den Cer/Zirkonium/Seltenerdmetall-Mischoxiden kommen beispielsweise Lanthanoxid, Yttriumoxid, Praseodymoxid, Neodymoxid und/oder Samariumoxid in Betracht.

Bevorzugt sind Lanthanoxid, Yttriumoxid und/oder Praseodymoxid. Besonders bevorzugt sind Lanthanoxid und/oder Yttriumoxid und ganz besonders bevorzugt sind Lanthanoxid und Yttriumoxid, Yttriumoxid und Praseodymoxid, sowie Lanthanoxid und Praseodymoxid.

Erfindungsgemäß kann das Verhältnis von Ceroxid zu Zirkoniumoxid in den Cer/Zirkonium/Seltenerdmetall-Mischoxiden in weiten Grenzen variieren. Es beträgt beispielsweise 0,1 bis 1,0, bevorzugt von 0,2 bis 0,7, besonders bevorzugt von 0,3 bis 0,5.

Die Sauerstoffspeicherkomponenten werden üblicherweise in Mengen von 50 bis 120 g/l, bezogen auf das Volumen des Wandflussfilters, eingesetzt.

In Ausführungsformen der vorliegenden Erfindung enthalten eine oder mehrere der Beschichtungen X, Y und Z eine Erdalkaliverbindung wie z.B. Bariumoxid oder Bariumsulfat. Bevorzugte Ausführungsformen enthalten Bariumsulfat in den Beschichtungen X und Y. Die Menge an Bariumsulfat je Beschichtung beträgt insbesondere 5 bis 20 g/l Volumen des Wandflussfilters.

In weiteren Ausführungsformen der vorliegenden Erfindung enthalten eine oder mehrere der Beschichtungen X, Y und Z Additive wie Seltenerdverbindungen wie z.B. Lanthanoxid und/oder Binder, wie z.B. Aluminiumverbindungen. Diese Additive werden in Mengen verwendet, die in weiten Grenzen variieren können und die der Fachmann im konkreten Fall mit einfachen Mitteln bestimmen kann.

In Ausführungsformen der vorliegenden Erfindung umfasst die Beschichtung X Lanthan-stabilisiertes Aluminiumoxid, Palladium oder Palladium und Rhodium, eine erste, Zirkoniumoxid, Ceroxid, Yttriumoxid und Lanthanoxid umfassende, Sauerstoffspeicherkomponente, sowie eine zweite, Zirkoniumoxid, Ceroxid, Yttriumoxid und Praseodymoxid umfassende, Sauerstoffspeicherkomponente.

Bevorzugt umfasst die Beschichtung X Lanthan-stabilisiertes Aluminiumoxid in Mengen von 20 bis 40 Gew.-%, besonders bevorzugt 25 bis 30 Gew.-%, bezogen auf das Gesamtgewicht der Beschichtung X.

Bevorzugt umfasst die Beschichtung X jede der beiden Sauerstoffspeicherkomponenten in Mengen von 25 bis 35 Gew.-%, bezogen auf das Gesamtgewicht der Beschichtung X.

Gemäss der Erfindung erstreckt sich die Beschichtung X über die gesamte Länge L des Wandflussfilters. Die Beladung des Wandflussfilters mit Beschichtung X beträgt bevorzugt 25 bis 150 g/l, bezogen auf das Volumen des Wandflussfilters.

In Ausführungsformen der vorliegenden Erfindung umfasst die Beschichtung Y Lanthan-stabilisiertes Aluminiumoxid, Palladium oder Palladium und Rhodium und eine Zirkoniumoxid, Ceroxid, Lanthanoxid und Praseodymoxid umfassende Sauerstoffspeicherkomponente.

Bevorzugt umfasst die Beschichtung X Lanthan-stabilisiertes Aluminiumoxid in Mengen von 30 bis 60 Gew.-%, besonders bevorzugt 40 bis 50 Gew.-%, bezogen auf das Gesamtgewicht der Beschichtung Y.

Bevorzugt umfasst die Beschichtung Y die Sauerstoffspeicherkomponente in Mengen von 30 bis 60 Gew.-%, besonders bevorzugt 40 bis 50 Gew.-%, bezogen auf das Gesamtgewicht der katalytisch aktiven Beschichtung Y.

Gemäss der Erfindung erstreckt sich die Beschichtung Y ausgehend vom ersten Ende des Wandflussfilters über 20 bis 70 %, bevorzugt 25 bis 61 % der Länge L des Wandflussfilters. Die Beladung des Wandflussfilters mit Beschichtung Y beträgt bevorzugt 50 bis 70 g/l, bezogen auf das Volumen des Wandflussfilters.

In Ausführungsformen der vorliegenden Erfindung umfasst die Beschichtung Z Lanthan-stabilisiertes Aluminiumoxid, Palladium oder Palladium und Rhodium und eine Zirkoniumoxid, Ceroxid, Lanthanoxid und Yttriumoxid umfassende Sauerstoffspeicherkomponente.

Bevorzugt umfasst die Beschichtung Z Lanthan-stabilisiertes Aluminiumoxid in Mengen von 40 bis 65 Gew.-%, besonders bevorzugt 50 bis 60 Gew.-%, bezogen auf das Gesamtgewicht der Beschichtung Z.

Bevorzugt umfasst die Beschichtung Z die Sauerstoffspeicherkomponente in Mengen von 30 bis 60 Gew.-%, besonders bevorzugt 40 bis 50 Gew.-%, bezogen auf das Gesamtgewicht der Beschichtung Z.

Gemäss der Erfindung erstreckt sich die Beschichtung Z ausgehend vom zweiten Ende des Wandflussfilters über 20 bis 70 %, bevorzugt 25 bis 61 % seiner Länge L. Die Beladung des Wandflussfilters mit Beschichtung Z beträgt bevorzugt 50 bis 70 g/l, bezogen auf das Volumen des Wandflussfilters.

Gemäss der Erfindung ist die Summe der Längen der Beschichtungen Y und Z kleiner als die Filtergesamtlänge L, bevorzugt ist sie ≤ 90%, besonders bevorzugt ≤ 80% der Gesamtfilterlänge L.

In einer Ausführungsform der vorliegenden Erfindung betrifft diese ein Partikelfilter, das ein Wandflussfilter der Länge L und drei voneinander verschiedene Beschichtungen X, Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. O_{A} bilden und wobei die Kanäle E am zweiten Ende und die Kanäle A am ersten Ende gasdicht verschlossen sind, dadurch gekennzeichnet, dass
- sich Beschichtung X in den porösen Wänden befindet, sich über die gesamte Länge L des Wandflussfilters erstreckt und Lanthan-stabilisiertes Aluminiumoxid in einer Menge von 25 bis 30 Gew.-%, bezogen auf das Gesamtgewicht der Beschichtung X, Palladium oder Palladium und Rhodium, eine erste, Zirkoniumoxid, Ceroxid, Yttriumoxid und Lanthanoxid umfassende, Sauerstoffspeicher-komponente in einer Menge von 25 bis 35 Gew.-%, bezogen auf das Gesamtgewicht der Beschichtung X, und eine zweite, Zirkoniumoxid, Ceroxid, Yttriumoxid und Praseodymoxid umfassende, Sauerstoffspeicherkomponente in einer Menge von 25 bis 35 Gew.-%, bezogen auf das Gesamtgewicht der Beschichtung X, enthält und
- sich Beschichtung Y in den Kanälen E auf den Oberflächen O_{E} befindet, sich ausgehend vom ersten Ende des Wandflussfilters auf 25 bis 75 % seiner Länge L erstreckt und Lanthan-stabilisiertes Aluminiumoxid in einer Menge von 40 bis 50 Gew.-%, bezogen auf das Gesamtgewicht der Beschichtung Y, Palladium oder Palladium und Rhodium und eine Zirkoniumoxid, Ceroxid, Lanthanoxid und Praseodymoxid umfassende Sauerstoffspeicherkomponente in einer Menge von 40 bis 50 Gew.-%, bezogen auf das Gesamtgewicht der Beschichtung Y enthält und
- sich die Beschichtung Z in den Kanälen A auf den Oberflächen O_{A} befindet, sich ausgehend vom zweiten Ende des Wandflussfilters auf 25 bis 75 % seiner Länge L erstreckt und Lanthan-stabilisiertes Aluminiumoxid in einer Menge von 50 bis 60 Gew.-%, bezogen auf das Gesamtgewicht der Beschichtung Z, Palladium oder Palladium und Rhodium und eine Zirkoniumoxid, Ceroxid, Lanthanoxid und Yttriumoxid umfassende Sauerstoffspeicherkomponente in einer Menge von 40 bis 50 Gew.-%, bezogen auf das Gesamtgewicht der Beschichtung Z enthält.

Wandflussfilter, die gemäß vorliegender Erfindung verwendet werden können, sind bekannt und am Markt erhältlich. Sie bestehen beispielsweise aus Silicium-Carbid, Aluminium-Titanat oder Cordierit, haben beispielsweise eine Zelligkeit von 200 bis 400 Zellen pro Inch und üblicherweise eine Wandstärke zwischen 6 und 12 Mil, bzw. 0,1524 und 0,305 Millimeter Sie weisen in unbeschichtetem Zustand beispielsweise Porositäten von 50 bis 80, insbesondere 55 bis 75% auf. Ihre durchschnittliche Porengröße beträgt in unbeschichtetem Zustand beispielsweise 10 bis 25 Mikrometer. In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Die Herstellung des erfindungsgemäßen Partikelfilters kann nach dem Fachmann geläufigen Methoden erfolgen, so etwa dadurch, dass eine Beschichtungssuspension, die üblicherweise Washcoat genannt wird, mittels eines der üblichen Tauchbeschichtungsverfahren bzw. Pump- und Saug-Beschichtungsverfahren auf das Wandflussfilter appliziert wird. Thermische Nachbehandlung bzw. Kalzination schließen sich üblicherweise an.

Die Beschichtungen X, Y und Z werden in getrennten und aufeinanderfolgenden Beschichtungsschritten erhalten.

Dem Fachmann ist bekannt, dass die durchschnittliche Porengröße des Wandflussfilters und die mittlere Teilchengröße der katalytisch aktiven Materialien aufeinander abgestimmt werden müssen, um eine auf-Wand-Beschichtung oder eine in-Wand-Beschichtung zu erzielen. In Fall der in-Wand-Beschichtung muss die mittlere Teilchengröße der katalytisch aktiven Materialien klein genug sein, um in die Poren des Wandflussfilters einzudringen. Dagegen muss im Fall der auf-Wand-Beschichtung die mittlere Teilchengröße der katalytisch aktiven Materialien groß genug sein, um nicht in die Poren des Wandflussfilters einzudringen.

In Ausführungsformen der vorliegenden Erfindung wird die Beschichtungssuspension zur Herstellung der Beschichtung X bis zu einer Partikelgrößenverteilung von d₅₀ = 1 bis 3 µm und d₉₉ = 9 bis 5 µm gemahlen.

In Ausführungsformen der vorliegenden Erfindung wird die Beschichtungssuspension zur Herstellung der Beschichtung Y bis zu einer Partikelgrößenverteilung von d₅₀ = 4 bis 8 µm und d₉₉ = 22 bis 16 µm gemahlen.

In Ausführungsformen der vorliegenden Erfindung wird die Beschichtungssuspension zur Herstellung der Beschichtung Z bis zu einer Partikelgrößenverteilung von d₅₀ = 4 bis 8 µm und d₉₉ = 22 bis 16 µm gemahlen.

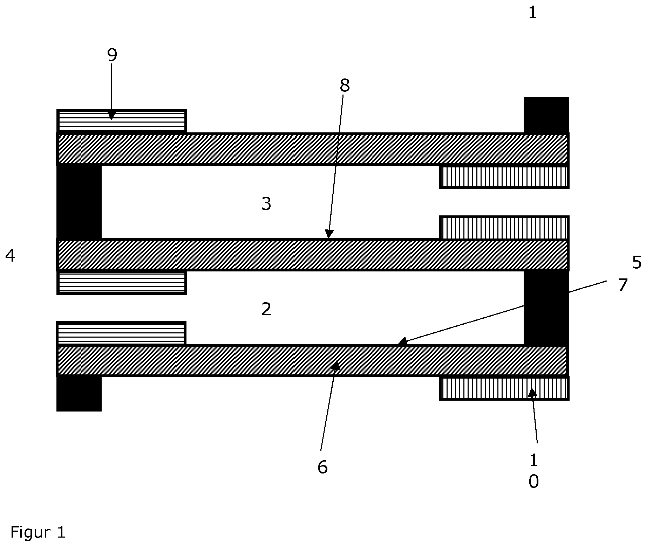

Figur 1 zeigt ein erfindungsgemäßes Partikelfilter, das ein Wandflussfilter der Länge L (1) mit Kanälen E (2) und Kanälen A (3) umfasst, die sich parallel zwischen einem ersten Ende (4) und einem zweiten Ende (5) des Wandflussfilters erstrecken und die durch poröse Wände (6) getrennt sind, die Oberflächen O_{E} (7) bzw. O_{A} (8) bilden und wobei die Kanäle E (2) am zweiten Ende (5) und die Kanäle A (3) am ersten Ende (4) gasdicht verschlossen sind. Die Beschichtung X befindet sich in den porösen Wänden (6), die Beschichtung Y (9) befindet sich in den Kanälen E (2) auf den Oberflächen O_{E} (7) und Beschichtung Z (10) in den Kanälen A (3) auf den Oberflächen O_{A} (8).

Die Erfindung wird in den nachstehenden Beispielen näher erläutert.

### Vergleichsbeispiel 1

Mit 4 Gew.-% Lanthanoxid stabilisiertes Aluminiumoxid und ein Cer/Zirkon-Mischoxid mit einem Ceroxid-Gehalt von 40 Gew.-% wurden in Wasser suspendiert. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension in die Filterwände des Substrats eingebracht. Der so erhaltene beschichtete Filter wurde getrocknet und anschließend kalziniert.

Die Gesamtbeladung des so erhaltenen Filters VGPF1 betrug 125 g/l, die Gesamtedelmetallbeladung 2,58 g/l mit einem Verhältnis von Palladium zu Rhodium 5,1 : 1.

### Vergleichsbeispiel 2

a) Mit 4 Gew.-% Lanthanoxid stabilisiertes Aluminiumoxid und ein Cer/Zirkon-Mischoxid mit einem Ceroxid-Gehalt von 33 Gew.-% wurden in Wasser suspendiert. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension in die Filterwände des Substrats eingebracht. Der so erhaltene beschichtete Filter wurde getrocknet und anschließend kalziniert.

Die Gesamtbeladung dieser Schicht betrug 100 g/l, die Gesamtedelmetallbeladung 2,05 g/l mit einem Verhältnis von Palladium zu Rhodium 3,9 : 1.

b) Mit 4 Gew.-% Lanthanoxid stabilisiertes Aluminiumoxid und Cer/Zirkon-Mischoxid mit einem Ceroxid-Gehalt von 40 Gew.-% wurden in Wasser suspendiert. Die so erhaltene Suspension wurde anschließend unter ständigem Rühren mit einer Palladiumnitrat-Lösung versetzt. Die resultierende Beschichtungssuspension wurde direkt zur Beschichtung des vorstehend unter a) erhaltenen Wandflussfiltersubstrats eingesetzt. Dabei wurde die Beschichtungssuspension nur in den Anströmkanälen auf die Wandoberflächen auf einer Länge von 25% der Gesamtlänge mit einer Beladung von 57 g/l aufgebracht. Der so erhaltene beschichtete Filter wurde getrocknet und anschließend kalziniert.

Die Gesamtedelmetallbeladung des so erhaltenen Filters VGPF2 betrug 2,58 g/l mit einem Verhältnis von Palladium zu Rhodium 5 : 1.

### Beispiel 1

a) Mit 4 Gew.-% Lanthanoxid stabilisiertes Aluminiumoxid und Cer/Zirkon-Mischoxid mit einem Ceroxid-Gehalt von 33 Gew.-% wurden in Wasser suspendiert. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension in die Filterwände des Substrats eingebracht. Der so erhaltene beschichtete Filter wurde getrocknet und anschließend kalziniert.

Die Gesamtbeladung dieser Schicht betrug 100 g/l, die Gesamtedelmetallbeladung 1,93 g/l mit einem Verhältnis von Palladium zu Rhodium 4,7 : 1.

b) Das gemäß a) erhaltene beschichtete Wandflussfilter wurde wie in Vergleichsbeispiel 2, Schritt b) angegeben, mit einer zweiten Beschichtung versehen.

c) Mit 4 Gew.-% Lanthanoxid stabilisiertes Aluminiumoxid und Cer/Zirkon-Mischoxid mit einem Ceroxid-Gehalt von 24 Gew.-% wurden in Wasser suspendiert. Die so erhaltene Suspension wurde anschließend unter ständigem Rühren mit einer Palladiumnitrat-Lösung und anschließend mit einer Rhodiumnitrat-Lösung versetzt. Die resultierende Beschichtungssuspension wurde direkt zur Beschichtung des in Schritt b) erhaltenen Wandflussfiltersubstrats eingesetzt. Dabei wurde die Beschichtungssuspension nur in die noch unbeschichteten Abströmkanälen des Substrats auf die Wandoberflächen auf einer Länge von 25% der Gesamtlänge mit einer Beladung von 54 g/l aufgebracht. Der so erhaltene beschichtete Filter wurde getrocknet und anschließend kalziniert.

Die Gesamtedelmetallbeladung des so erhaltenen Filters GPF1 betrug 2,58 g/l mit einem Verhältnis von Palladium zu Rhodium 5 : 1.

### Beispiel 2

Beispiel 1 wurde wiederholt mit dem Unterschied, dass in Schritt b) kein Cer/Zirkon-Mischoxid eingesetzt wurde.

Die Gesamtedelmetallbeladung des so erhaltenen Filters GPF2 betrug 2,58 g/l mit einem Verhältnis von Palladium zu Rhodium 5 : 1.

### Katalytische Charakterisierung

Die katalytisch aktiven Partikelfilter VGPF1, VGPF2, GPF1 und GPF2 wurden jeweils in frischem und gealterten Zustand im "lambda Sweeptest" getestet.

Die Partikelfilter wurden zusammen in einer Motorprüfstandsalterung gealtert. Diese besteht aus einer Schubabschaltungsalterung mit 950°C Abgastemperatur vor Katalysatoreingang (Maximale Betttemperatur 1030°C). Die Alterungszeit betrug 76 Stunden.

Im Anschluss an die Alterung wurde jeweils ein Teil der Partikelfilter VGPF1, VGPF2, GPF1 und GPF2 an einem Motorprüfstand mit jeweils 5 g/l Ruß beladen.

Anschließend wurden an einem Motorprüfstand das Anspringverhalten bei konstanter mittlerer Luftzahl λ und die dynamische Umsetzung bei Änderung von λ geprüft.

Die nachfolgenden Tabellen enthalten die Temperaturen Tso, bei denen jeweils 50% der betrachteten Komponente umgesetzt werden. Dabei wurde das Anspringverhalten bei stöchiometrischer Abgaszusammensetzung (λ =0,999 mit ±3,4% Amplitude) bestimmt.

Tabelle 1 enthält die Daten für die frischen, Tabelle 2 für die gealterten und Tabelle 3 für die mit Ruß beladenen Partikelfilter.

**Tabelle 1**

| | T₅₀ HC stöch | T₅₀ CO stöch | T₅₀ NOx stöch |
|---|---|---|---|
| VGPF1 | 260 | 254 | 257 |
| VGPF2 | 251 | 243 | 246 |
| GPF1 | 252 | 240 | 245 |
| GPF2 | 246 | 234 | 237 |

**Tabelle 2**

| | T₅₀ HC stöch | T₅₀ CO stöch | T₅₀ NOx stöch |
|---|---|---|---|
| VGPF1 | 415 | 439 | 429 |
| VGPF2 | 404 | 424 | 418 |
| GPF1 | 402 | 416 | 412 |
| GPF2 | 403 | 422 | 416 |

**Tabelle 3**

| | T₅₀ HC stöch | T₅₀ CO stöch | T₅₀ NOx stöch |
|---|---|---|---|
| VGPF1 | 392 | 403 | 402 |
| VGPF2 | 390 | 399 | 401 |
| GPF1 | 385 | 394 | 395 |
| GPF2 | 385 | 394 | 397 |

Das dynamische Umsatzverhalten der Partikelfilter wurde in einem Bereich für λ von 0,99 bis 1,01 bei einer konstanten Temperatur von 510°C bestimmt. Die Amplitude von λ betrug dabei ±3,4%. Tabelle 4 enthält den Umsatz am Schnittpunkt der CO- und der NOx-Umsatzkurven, sowie den zugehörigen HC-Umsatz der gealterten Partikelfilter. Tabelle 5 enthält die entsprechenden Punkte der mit Ruß beladenen Filter.

**Tabelle 4**

| | CO/NOx Umsatz am Kreuzungspunkt | HC Umsatz am λ des CO/NOx Kreuzungspunktes |
|---|---|---|
| VGPF1 | 64% | 94% |
| VGPF2 | 72% | 95% |
| GPF1 | 78% | 95% |
| GPF2 | 72% | 95% |

**Tabelle 5**

| | CO/NOx Umsatz am Kreuzunqspunkt | HC Umsatz am λ des CO/NOx Kreuzungspunktes |
|---|---|---|
| VGPF1 | 69% | 95% |
| VGPF2 | 78% | 96% |
| GPF1 | 85% | 96% |
| GPF2 | 80% | 95% |

Die erfindungsgemäßen Partikelfilter GPF1 und GPF2 zeigen im Vergleich zu VGPF1 und VGPF2 eine deutliche Verbesserung beim Anspringverhalten und beim dynamischen CO/NOx-Umsatz sowohl im frischen als auch im gealterten Zustand mit und ohne zusätzlich aufgebrachtem Ruß

## Patentansprüche

1. Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, der einen Wandflussfilter (1) der Länge L und drei voneinander verschiedene Beschichtungen X, Y und Z (9, 6, 10) umfasst, wobei der Wandflussfilter Kanäle E (2) und A (3) umfasst, die sich parallel zwischen einem ersten (4) und einem zweiten Ende (5) des Wandflussfilters (1) erstrecken und die durch poröse Wände (6) getrennt sind, die Oberflächen O_{E} (7) bzw. O_{A} (8) bilden und wobei die Kanäle E (2) am zweiten Ende (5) und die Kanäle A (3) am ersten Ende (4) gasdicht verschlossen sind, **dadurch gekennzeichnet, dass** sich Beschichtung X (6) in den porösen Wänden (6), Beschichtung Y (9)in den Kanälen E (2) auf den Oberflächen O_{E} (7) und Beschichtung Z (10) in den Kanälen A (3) auf den Oberflächen O_{A} (8) befindet, wobei sich die Beschichtung X (6) über die gesamte Länge L des Wandflussfilters (1) erstreckt und sich die Beschichtung Y (9) ausgehend vom ersten Ende (4) des Wandflussfilters (1) über 20 bis 70 % der Länge L des Wandflussfilters (1) erstreckt sowie sich die katalytisch aktive Beschichtung Z (10) ausgehend vom zweiten Ende (5) des Wandflussfilters (1) über 20 bis 70 % der Länge L des Wandflussfilters (1) erstreckt und die Summe der Längen der Beschichtungen Y (9) und Z (10) kleiner als die Filtergesamtlänge L ist.

2. Partikelfilter gemäß Anspruch 1, **dadurch gekennzeichnet, dass** die Beschichtungen X, Y und Z (9, 6, 10) jeweils ein oder mehrere Edelmetalle, die auf einem oder mehreren Trägermaterialien fixiert sind, sowie ein oder mehrere Sauerstoffspeicherkomponenten enthalten.

3. Partikelfilter gemäß Anspruch 2, **dadurch gekennzeichnet, dass** die Beschichtungen X, Y und Z (9, 6, 10) jeweils die Edelmetalle Platin, Palladium und/oder Rhodium enthalten.

4. Partikelfilter gemäß Anspruch 2 und/oder 3, **dadurch gekennzeichnet, dass** die Beschichtungen X, Y und Z (9, 6, 10) jeweils die Edelmetalle Palladium, Rhodium oder Palladium und Rhodium enthalten.

5. Partikelfilter gemäß einem oder mehreren der Ansprüche 2 bis 4, **dadurch gekennzeichnet, dass** die Trägermaterialien für die Edelmetalle Metalloxide mit einer BET-Oberfläche von 30 bis 250 m²/g (bestimmt nach DIN 66132) sind.

6. Partikelfilter gemäß einem oder mehreren der Ansprüche 2 bis 5, **dadurch gekennzeichnet, dass** die Trägermaterialien für die Edelmetalle ausgewählt sind aus der Reihe bestehend aus Aluminiumoxid, dotiertes Aluminiumoxid, Siliziumoxid, Titandioxid und Mischoxiden aus einem oder mehreren davon.

7. Partikelfilter gemäß einem oder mehreren der Ansprüche 2 bis 6, **dadurch gekennzeichnet, dass** die Beschichtungen X, Y und Z (9, 6, 10) als Sauerstoffspeicherkomponente Cer/Zirkonium/Seltenerdmetall-Mischoxide enthalten.

8. Partikelfilter gemäß Anspruch 7, **dadurch gekennzeichnet, dass** die Cer/Zirkonium/Seltenerdmetall-Mischoxide als Seltenerdmetalloxid Lanthanoxid, Yttriumoxid, Praseodymoxid, Neodymoxid und/oder Samariumoxid enthalten

9. Partikelfilter gemäß Anspruch 7 und/oder 8, **dadurch gekennzeichnet, dass** die Cer/Zirkonium/Seltenerdmetall-Mischoxide als Seltenerdmetalloxid Lanthanoxid und Yttriumoxid, Yttriumoxid und Praseodymoxid oder Lanthanoxid und Praseodymoxid enthalten.

10. Partikelfilter gemäß einem oder mehreren der Ansprüche 1 bis 9, **dadurch gekennzeichnet, dass** die Beschichtung X Lanthan-stabilisiertes Aluminiumoxid, Palladium oder Palladium und Rhodium, eine erste, Zirkoniumoxid, Ceroxid, Yttriumoxid und Lanthanoxid umfassende, Sauerstoffspeicherkomponente, sowie eine zweite, Zirkoniumoxid, Ceroxid, Yttriumoxid und Praseodymoxid umfassende, Sauerstoffspeicherkomponente enthält.

11. Partikelfilter gemäß einem oder mehreren der Ansprüche 1 bis 10, **dadurch gekennzeichnet, dass** die Beschichtung Y Lanthan-stabilisiertes Aluminiumoxid, Palladium oder Palladium und Rhodium und eine Zirkoniumoxid, Ceroxid, Lanthanoxid und Praseodymoxid umfassende Sauerstoffspeicherkomponente enthält.

12. Partikelfilter gemäß einem oder mehreren der Ansprüche 1 bis 11, **dadurch gekennzeichnet, dass** die Beschichtung Z Lanthan-stabilisiertes Aluminiumoxid, Palladium oder Palladium und Rhodium und eine Zirkoniumoxid, Ceroxid, Lanthanoxid und Yttriumoxid umfassende Sauerstoffspeicherkomponente enthält.

13. Partikelfilter gemäß einem oder mehreren der Ansprüche 1 bis 12, **dadurch gekennzeichnet, dass**
• sich Beschichtung X (6) in den porösen Wänden befindet, sich über die gesamte Länge L des Wandflussfilters erstreckt und Lanthan-stabilisiertes Aluminiumoxid in einer Menge von 25 bis 30 Gew.-%, bezogen auf das Gesamtgewicht der Beschichtung X, Palladium oder Palladium und Rhodium, eine erste, Zirkoniumoxid, Ceroxid, Yttriumoxid und Lanthanoxid umfassende, Sauerstoffspeicher-komponente in einer Menge von 25 bis 35 Gew.-%, bezogen auf das Gesamtgewicht der Beschichtung X (6), und eine zweite, Zirkoniumoxid, Ceroxid, Yttriumoxid und Praseodymoxid umfassende, Sauerstoffspeicherkomponente in einer Menge von 25 bis 35 Gew.-%, bezogen auf das Gesamtgewicht der Beschichtung X (6), enthält und
• sich Beschichtung Y (9) in den Kanälen E (2) auf den Oberflächen O_{E} (7) befindet, sich ausgehend vom ersten Ende (4) des Wandflussfilters (1) auf 25 bis 75 % seiner Länge L erstreckt und Lanthan-stabilisiertes Aluminiumoxid in einer Menge von 40 bis 50 Gew.-%, bezogen auf das Gesamtgewicht der Beschichtung Y (9), Palladium oder Palladium und Rhodium und eine Zirkoniumoxid, Ceroxid, Lanthanoxid und Praseodymoxid umfassende Sauerstoffspeicherkomponente in einer Menge von 40 bis 50 Gew.-%, bezogen auf das Gesamtgewicht der Beschichtung Y (9) enthält und
• sich Beschichtung Z (10) in den Kanälen A (3) auf den Oberflächen O_{A} (8) befindet, sich ausgehend vom zweiten Ende (5) des Wandflussfilters (1) auf 25 bis 75 % seiner Länge L erstreckt und Lanthan-stabilisiertes Aluminiumoxid in einer Menge von 50 bis 60 Gew.-%, bezogen auf das Gesamtgewicht der Beschichtung Z, Palladium oder Palladium und Rhodium und eine Zirkoniumoxid, Ceroxid, Lanthanoxid und Yttriumoxid umfassende Sauerstoffspeicherkomponente in einer Menge von 40 bis 50 Gew.-%, bezogen auf das Gesamtgewicht der Beschichtung Z (10) enthält.

## Claims

1. Particle filter for removing particles, carbon monoxide, hydrocarbons and nitrogen oxides out of the exhaust gas of combustion engines operated with a stoichiometric air-fuel mixture, comprising a wall-flow filter (1) of length L and three coatings X, Y and Z (9, 6, 10) that differ from one another, the wall-flow filter comprising channels E (2) and A (3), which extend in parallel between a first end (4) and a second end (5) of the wall-flow filter (1) and are separated by porous walls (6), which form surfaces O_{E} (7) and O_{A} (8), and the channels E (2) being sealed in a gas-tight manner at the second end (5) and the channels A (3) being sealed in a gas-tight manner at the first end (4), **characterized in that** coating X (6) is located in the porous walls (6), coating Y (9) is located in the channels E (2) on the surfaces O_{E} (7), and coating Z (10) is located in the channels A (3) on the surfaces O_{A} (8), the coating X (6) extending over the entire length L of the wall-flow filter (1), the coating Y (9) extending from the first end (4) of the wall-flow filter (1) over 20 to 70% of the length L of the wall-flow filter (1), and the catalytically active coating Z (10) extending from the second end (5) of the wall-flow filter (1) over 20 to 70% of the length L of the wall-flow filter (1), and the sum of the lengths of the coatings Y (9) and Z (10) being less than the total filter length L.

2. Particle filter in accordance with claim 1, **characterized in that** each of the coatings X, Y and Z (9, 6, 10) contains one or more noble metals, which are fixed to one or more carrier materials, and one or more oxygen storage components.

3. Particle filter in accordance with claim 2, **characterized in that** each of the coatings X, Y and Z (9, 6, 10) contains the noble metals platinum, palladium and/or rhodium.

4. Particle filter in accordance with claim 2 and/or 3, **characterized in that** each of the coatings X, Y and Z (9, 6, 10) contains the noble metals palladium, rhodium or palladium and rhodium.

5. Particle filter in accordance with one or more of claims 2 to 4, **characterized in that** the carrier materials for the noble metals are metal oxides having a BET surface of 30 to 250 m²/g (determined according to DIN 66132).

6. Particle filter in accordance with one or more of claims 2 to 5, **characterized in that** the carrier materials for the noble metals are selected from the series consisting of aluminum oxide, doped aluminum oxide, silicon oxide, titanium dioxide and mixed oxides of one or more of these.

7. Particle filter in accordance with one or more of claims 2 to 6, **characterized in that** the coatings X, Y and Z (9, 6, 10) contain cerium/zirconium/rare earth metal mixed oxides as oxygen storage components.

8. Particle filter in accordance with claim 7, **characterized in that** the cerium/zirconium/rare earth metal mixed oxides contain lanthanum oxide, yttrium oxide, praseodymium oxide, neodymium oxide and/or samarium oxide as the rare earth metal oxide.

9. Particle filter in accordance with claim 7 and/or 8, **characterized in that** the cerium/zirconium/rare earth metal mixed oxides contain lanthanum oxide and yttrium oxide, yttrium oxide and praseodymium oxide, or lanthanum oxide and praseodymium oxide as the rare earth metal oxide.

10. Particle filter in accordance with one or more of claims 1 to 9, **characterized in that** the coating X contains lanthanum-stabilized aluminum oxide, palladium or palladium and rhodium, a first oxygen storage component comprising zirconium oxide, cerium oxide, yttrium oxide and lanthanum oxide, and a second oxygen storage component comprising zirconium oxide, cerium oxide, yttrium oxide and praseodymium oxide.

11. Particle filter in accordance with one or more of claims 1 to 10, **characterized in that** the coating Y contains lanthanum-stabilized aluminum oxide, palladium or palladium and rhodium, and an oxygen storage component comprising zirconium oxide, cerium oxide, lanthanum oxide and praseodymium oxide.

12. Particle filter in accordance with one or more of claims 1 to 11, **characterized in that** the coating Z contains lanthanum-stabilized aluminum oxide, palladium or palladium and rhodium, and an oxygen storage component comprising zirconium oxide, cerium oxide, lanthanum oxide and yttrium oxide.

13. Particle filter in accordance with one or more of claims 1 to 12, **characterized in that**
• coating X (6) is located in the porous walls, extends over the entire length L of the wall-flow filter and contains lanthanum-stabilized aluminum oxide in an amount of 25 to 30 wt.% based on the total weight of the coating X, palladium or palladium and rhodium, a first oxygen storage component comprising zirconium oxide, cerium oxide, yttrium oxide and lanthanum oxide in an amount of 25 to 35 wt.% based on the total weight of the coating X (6), and a second oxygen storage component comprising zirconium oxide, cerium oxide, yttrium oxide and praseodymium oxide in an amount of 25 to 35 wt.% based on the total weight of the coating X (6), and
• coating Y (9) is located in the channels E (2) on the surfaces O_{E} (7), extends from the first end (4) of the wall-flow filter (1) over 25 to 75% of its length L and contains lanthanum-stabilized aluminum oxide in an amount of 40 to 50 wt.% based on the total weight of the coating Y (9), palladium or palladium and rhodium, and an oxygen storage component comprising zirconium oxide, cerium oxide, lanthanum oxide and praseodymium oxide in an amount of 40 to 50 wt.% based on the total weight of the coating Y (9), and
• coating Z (10) is located in the channels A (3) on the surfaces O_{A} (8), extends from the second end (5) of the wall-flow filter (1) over 25 to 75% of its length L and contains lanthanum-stabilized aluminum oxide in an amount of 50 to 60 wt.% of the total weight of the coating Z, palladium or palladium and rhodium, and an oxygen storage component comprising zirconium oxide, cerium oxide, lanthanum oxide and yttrium oxide in an amount of 40 to 50 wt.% based on the total weight of the coating Z (10).

## Revendications

1. Filtre à particules pour l'élimination de particules, monoxyde de carbone, hydrocarbures et oxydes d'azote des gaz d'échappement de moteurs à combustion fonctionnant avec un mélange d'air/carburant stœchiométrique, lequel comprend un filtre à effet wall-flow (1) de longueur L et trois revêtements X, Y et Z (9, 6, 10) différents les uns des autres, le filtre à effet wall-flow comprenant des conduits E (2) et A (3), qui s'étendent parallèlement entre une première (4) et une seconde extrémité (5) du filtre à effet wall-flow (1) et qui sont séparés par des parois poreuses (6), qui forment les surfaces O_{E} (7) ou O_{A} (8) et les conduits E (2) étant fermés à la seconde extrémité (5) et les conduits A (3) étant fermés à la première extrémité (4) de façon étanche aux gaz, **caractérisé en ce que** le revêtement X (6) se situe dans les parois poreuses (6), le revêtement Y (9) dans les conduits E (2) sur les surfaces O_{E} (7) et le revêtement Z (10) dans les conduits A (3) sur les surfaces O_{A} (8), le revêtement X (6) s'étendant sur la longueur L totale du filtre à effet wall-flow (1) et le revêtement Y (9) s'étendant à partir de la première extrémité (4) du filtre à effet wall-flow (1) sur 20 à 70 % de la longueur L du filtre à effet wall-flow (1) ainsi que le revêtement à activité catalytique Z (10) s'étendant à partir de la seconde extrémité (5) du filtre à effet wall-flow (1) sur 20 à 70 % de la longueur L du filtre à effet wall-flow (1) et la somme des longueurs des revêtements Y (9) et Z (10) étant inférieure à la longueur totale du filtre L.

2. Filtre à particules selon la revendication 1, **caractérisé en ce que** les revêtements X, Y et Z (9, 6, 10) contiennent respectivement un ou plusieurs métaux précieux, qui sont fixés sur un ou plusieurs supports, ainsi qu'un ou plusieurs composants accumulateurs d'oxygène.

3. Filtre à particules selon la revendication 2, **caractérisé en ce que** les revêtements X, Y et Z (9, 6, 10) contiennent respectivement les métaux précieux platine, palladium et/ou rhodium.

4. Filtre à particules selon la revendication 2 et/ou 3, **caractérisé en ce que** les revêtements X, Y et Z (9, 6, 10) contiennent respectivement les métaux précieux palladium, rhodium ou palladium et rhodium.

5. Filtre à particules selon une ou plusieurs des revendications 2 à 4, **caractérisé en ce que** les supports pour métaux précieux sont des oxydes métalliques ayant une surface BET de 30 à 250 m²/g (déterminée selon la norme DIN 66132).

6. Filtre à particules selon une ou plusieurs des revendications 2 à 5, **caractérisé en ce que** les supports pour métaux précieux sont choisis parmi le groupe comprenant l'oxyde d'aluminium, l'oxyde d'aluminium dopé, l'oxyde de silicium, le dioxyde de titane et des oxydes mixtes composés d'un ou plusieurs de ceux-ci.

7. Filtre à particules selon une ou plusieurs des revendications 2 à 6, **caractérisé en ce que** les revêtements X, Y et Z (9, 6, 10) contiennent comme composant accumulateur d'oxygène des oxydes mixtes de cérium/zirconium/métal de terres rares.

8. Filtre à particules selon la revendication 7, **caractérisé en ce que** les oxydes mixtes de cérium/zirconium/métal de terres rares contiennent en tant qu'oxyde de métal de terres rares de l'oxyde de lanthane, de l'oxyde d'yttrium, de l'oxyde de praséodyme, de l'oxyde de néodyme et/ou de l'oxyde de samarium

9. Filtre à particules selon la revendication 7 et/ou 8, **caractérisé en ce que** les oxydes mixtes de cérium/zirconium/métal de terres rares contiennent en tant qu'oxyde de métal de terres rares de l'oxyde de lanthane et de l'oxyde d'yttrium, de l'oxyde d'yttrium et de l'oxyde de praséodyme ou de l'oxyde de lanthane et de l'oxyde de praséodyme.

10. Filtre à particules selon une ou plusieurs des revendications 1 à 9, **caractérisé en ce que** le revêtement X contient de l'oxyde d'aluminium stabilisé par du lanthane, du palladium ou du palladium et du rhodium, un premier composant accumulateur d'oxygène comprenant de l'oxyde de zirconium, de l'oxyde de cérium, de l'oxyde d'yttrium et de l'oxyde de lanthane ainsi qu'un second composant accumulateur d'oxygène comprenant de l'oxyde de zirconium, de l'oxyde de cérium, de l'oxyde d'yttrium et de l'oxyde de praséodyme.

11. Filtre à particules selon une ou plusieurs des revendications 1 à 10, **caractérisé en ce que** le revêtement Y contient de l'oxyde d'aluminium stabilisé par du lanthane, du palladium ou du palladium et du rhodium et un composant accumulateur d'oxygène comprenant de l'oxyde de zirconium, de l'oxyde de cérium, de l'oxyde de lanthane et de l'oxyde de praséodyme.

12. Filtre à particules selon une ou plusieurs des revendications 1 à 11, **caractérisé en ce que** le revêtement Z contient de l'oxyde d'aluminium stabilisé par du lanthane, du palladium ou du palladium et du rhodium et un composant accumulateur d'oxygène comprenant de l'oxyde de zirconium, de l'oxyde de cérium, de l'oxyde de lanthane et de l'oxyde d'yttrium.

13. Filtre à particules selon une ou plusieurs des revendications 1 à 12, **caractérisé en ce que**
• le revêtement X (6) se situe dans les parois poreuses, s'étend sur la longueur L totale du filtre à effet wall-flow et contient de l'oxyde d'aluminium stabilisé par du lanthane en une quantité de 25 à 30 % en poids sur la base du poids total du revêtement X, du palladium ou du palladium et du rhodium, un premier composant accumulateur d'oxygène comprenant de l'oxyde de zirconium, de l'oxyde de cérium, de l'oxyde d'yttrium et de l'oxyde de lanthane, en une quantité de 25 à 35 % en poids sur la base du poids total du revêtement X (6), et un second composant accumulateur d'oxygène comprenant de l'oxyde de zirconium, de l'oxyde de cérium, de l'oxyde d'yttrium et de l'oxyde de praséodyme, en une quantité de 25 à 35 % en poids sur la base du poids total du revêtement X (6) et
• le revêtement Y (9) se situe dans les conduits E (2) sur les surfaces O_{E} (7), s'étend à partir de la première extrémité (4) du filtre à effet wall-flow (1) sur 25 à 75 % de sa longueur L et contient de l'oxyde d'aluminium stabilisé par du lanthane en une quantité de 40 à 50 % en poids sur la base du poids total du revêtement Y (9), du palladium ou du palladium et du rhodium et un composant accumulateur d'oxygène comprenant de l'oxyde de zirconium, de l'oxyde de cérium, de l'oxyde de lanthane et de l'oxyde de praséodyme, en une quantité de 40 à 50 % sur la base du poids total du revêtement Y (9) et
• le revêtement Z (10) se situe dans les conduits A (3) sur les surfaces O_{A}, s'étend à partir de la seconde extrémité (5) du filtre à effet wall-flow (1) sur 25 à 75 % de la longueur L du filtre à effet wall-flow (1) et contient de l'oxyde d'aluminium stabilisé par du lanthane en une quantité de 50 à 60 % en poids sur la base du poids total du revêtement Z, du palladium ou du palladium et du rhodium et un composant accumulateur d'oxygène comprenant de l'oxyde de zirconium, de l'oxyde de cérium, de l'oxyde de lanthane et de l'oxyde d'yttrium, en une quantité de 40 à 50 % sur la base du poids total du revêtement Z (10).
